**Europäisches Patentamt**

**European Patent Office**

**Office européen des brevets**

(19)

(11) Veröffentlichungsnummer : **0 654 364 A1**

(12) # EUROPÄISCHE PATENTANMELDUNG

(21) Anmeldenummer : **94890181.4**

(22) Anmeldetag : **27.10.94**

(51) Int. Cl.[6] : **B60C 1/00,** C08L 21/00, C08K 5/34

(30) Priorität : **08.11.93 AT 2262/93**

(43) Veröffentlichungstag der Anmeldung : **24.05.95 Patentblatt 95/21**

(84) Benannte Vertragsstaaten : **AT DE FR GB IT**

(71) Anmelder : **Semperit Reifen Aktiengesellschaft Wienersdorferstrasse 20-24 A-2514 Traiskirchen (AT)**

(72) Erfinder : **Holocher-Ertl, Martin, Dr. Schubertgasse 33 A-2340 Mödling (AT)** Erfinder : **Rennar, Nikolaus, Dr. Leipziger Strasse 36 D-31303 Burgdorf (DE)**

(74) Vertreter : **Vinazzer, Edith et al Semperit Reifen Aktiengesellschaft Patentabteilung Wienersdorferstrasse 20-24 A-2514 Traiskirchen (AT)**

(54) **Kautschukmischung.**

(57) Kautschukmischung für den Laufstreifen eines Reifens, welche epoxidiertes Polydien in einem Anteil zwischen 3 und 80 Gewichtsprozent, bezogen auf 100 Gewichtsteile Kautschuk, sowie 3 bis 100 Gewichtsteile Kieselsäure und bis zu 100 Gewichtsteile Ruß enthält.

EP 0 654 364 A1

Die vorliegende Erfindung betrifft eine Kautschukmischung für den Laufstreifen eines Reifens sowie einen Reifen mit einem derartigen Laufstreifen.

In letzter Zeit wird durch das ständig steigende Umweltbewußtsein und die damit einhergehende Diskussion über die Senkung des Kraftstoffverbrauches auch an die Reifenhersteller die Aufgabe gestellt, Reifen zu entwicklen, die ihren Beitrag an einer Verringerung der Umweltbelastung leisten können. Der angesprochene Problemkreis umfaßt nun einerseits den Einsatz von ökologisch unbedenklichen Materialien im Reifenbau und andererseits die Aufgabe, den Rollwiderstand von Reifen zu senken, was bekannterweise mit einer Verringerung des Kraftstoffverbrauches des Kraftfahrzeuges einhergeht. Diesbezügliche Entwicklungen und Lösungen sollen idealerweise mit keiner Verschlechterung anderer Reifeneigenschaften, beispielsweise was Naßgriff oder Abrieb betrifft, einhergehen, wobei allgemein bekannt ist, daß Verbesserungen im Naßgriff meist mit Einbußen im Abrieb und im Rollwiderstand einhergehen und Verbesserungen im Rollwiderstand je nach Art der gewählten Maßnahme entweder zu Lasten des Abriebs oder zu Lasten des Naßgriffes gehen. Es herrscht diesbezüglich die Meinung vor, daß es ausgesprochen schwierig ist, in dieser Dreiecksbezeichnung von Naßgriff, Abrieb und Rollwiderstand ein gleichermaßen hohes Niveau zu erhalten.

Es ist ferner bekannt, daß sich der Einsatz von Kieseläure als Füllstoff in Laufstreifenmischungen auf den Rollwiderstand des Reifens, im Sinne einer Verringerung desselben, positiv auswirken kann. Da jedoch die Wechselwirkung von Kieselsäure zu den gängigen Kautschuktypen, auch unter Verwendung von Silanen als Kopplungsmittel, im allgemeinen geringer ist als jene von Ruß, verschlechtert sich der Abrieb. Zum Thema Einsatz von Kieselsäure in Kautschukmischungen wurde bereits eine Vielzahl von Lösungen vorgeschlagen, die zum Teil auch in der Praxis verwirklicht wurden bzw. sind. So ist beispielsweise aus der EP-A 0501227 eine Kautschukmischung für den Laufstreifen eines Reifens bekannt, die von ihrer Kautschukkomponente her auf einem Copolymer eines konjugierten Diens und einer aromatischen Vinylverbindung insbesondere einem Lösungs-Styrolbutadienkautschuk (S-SBR) basiert. Neben den üblichen Zusätzen enthält diese Kautschukmischung 30 bis 150 Gewichtsteile, bezogen auf 100 Gewichtsteile Kautschuk, Kieselsäure, die eine besondere Morphologie aufweist. Die Morphologie dieser Kieselsäure ist definiert durch eine BET-Fläche von 100 bis 250 m$^2$/g, einer CTAB-Fläche von 150 bis 250 m$^2$/g, einer Ölzahl von 150 bis 250 ml/100 g und einer durchschnittlichen projezierten Fläche der Aggregate von mehr als 8.500 nm$^2$ vor der Anwendung und 7.000 bis 8.400 nm$^2$ nach dem Einmischen. Reifen mit Laufstreifen aus einer derartigen Kautschukmischung sollen einen guten Kompromiß bezüglich bestimmter Reifeneigenschaften, beispielsweise geringem Rollwiderstand, verbessertem Naßgriff und Schneegriff und geringem Abrieb, aufweisen. Die vorgeschlagene Lösung ist jedoch auf wenig gängige Kieselsäuretypen beschränkt und bedingt zudem eine Herstellung der Mischung, die ein hohes Niveau an fertigungstechnischem Know-How voraussetzt.

In der EP-A 0447066 wird vorgeschlagen, eine Laufstreifenmischung für einen Reifen auf der Basis eines Polymers mit einer Glasübergangstemperatur > - 50° C, welches auch ein S-SBR, ggf. im Verschnitt mit anderen Polymeren, sein kann, herzustellen, wobei dieser Mischung 10 bis 150 Gewichtsteile Kieselsäure, 0 bis 150 Gewichtsteile Ruß und 0,2 bis 10 Gewichtsteile eines schwefelhältigen Silans beigemengt werden. Ein Reifen mit einem derartigen Laufstreifen soll ebenfalls einen guten Naßgriff, geringen Rollwiderstand und geringen Abrieb aufweisen. Eine weitere Lösung in Zusammenhang mit dem Einsatz von Kieselsäure in Laufstreifenmischungen ist in der EP-A 0299074 vorgeschlagen. Die in dieser Patentanmeldung beschriebene Laufstreifenmischung basiert auf einem Lösungs-Copolymer (S-SBR), welches am Ende der Polymerisation mit einem schwefelfreien Silan modifiziert wird, so daß ein sogenanntes silanmodifiziertes Copolymer ggf. in Kombination mit anderen Dienkautschuken, die Polymerbasis für die Laufstreifenmischung bildet. Der Laufstreifenmischung wird ebenfalls Kieselsäure und auch Ruß beigemengt. Auch bei diesem Lösungsvorschlag stehen eine Verringerung des Abriebes und geringere Wärmeentwicklung, was mit einer Verringerung des Rollwiderstandes einhergeht, im Vordergrund. Diese bekannte Lösung schränkt jedoch die Reifenhersteller auf die Verfügbarkeit eines bestimmten silanmodifizierten Polymers ein.

Die Aufgabe der vorliegenden Erfindung besteht nun darin, eine Laufstreifenmischung für einen Reifen vorzuschlagen, die bei ihrer Verwendung im Laufstreifen von Reifen das Verhältnis von Rollwiderstand, Naßgriff und Abriebsverhalten auf ein höheres Niveau hebt und zudem herstellungstechnisch vergleichsweise einfach zu handhaben ist.

Gelöst wird die gestellte Aufgabe erfindungsgemäß dadurch, daß die Laufstreifenmischung auf einer Kautschukkomponente basiert, die aus einem Basispolymer bzw. einem Basispolymer-Verschnitt und einem epoxidierten Polydien in einem Anteil zwischen 3 und 80 Gewichtsprozent, bezogen auf 100 Gewichtsteile Kautschuk, besteht, wobei die Kautschukmischung als Füllstoff zwischen 3 und 100 Gewichtsteilen Kieselsäure und 0 bis 100 Gewichtsteile Ruß enthält.

Es wurde überraschenderweise festgestellt, daß Reifen mit Laufstreifen aus einer solchen Mischung einen gegenüber bekannten Mischungen unter Einsatz von Kieselsäure vergleichsweise geringen Rollwiderstand aufweisen, wobei jedoch vor allem deutliche Verbesserungen im Naßgriff und Abrieb feststellbar sind. Das sich ergebende Eigenschaftsbild dieser Reifen bzw. Laufstreifen dürfte insbesondere darauf zurückzuführen sein, daß epoxidiertes Polydien über seine Epoxi-Funktion in eine verstärkte Wechselwirkung mit Kieselsäure tritt, und somit die Art der Bindung an die Kieselsäure hier wesentlich ist. Durch diese verstärkte Wechselwirkung kann auf den Einsatz von Silanen als Kopplungsmittel verzichtet werden. Die Wechselwirkung der Kieselsäure zu jenen Polymeren, wie sie nach dem bekannten Stand der Technik mit Kieselsäure zum Einsatz kommen, hat bei einer Verringerung des Rollwiderstandes im allgemeinen zur Folge, daß der Abrieb steigt. Auch die Kombination Kieselsäure mit S-SBR hat, insbesondere bei jenen S-SBR-Typen, die einen relativ hohen Vinylanteil aufweisen, kaum positive Auswirkungen auf den Abrieb.

Das genannte Eigenschaftsbild von Laufstreifen ist insbesondere dann besonders günstig, wenn der Anteil an epoxidiertem Polydien in der Kautschukmischung zwischen 8 und 45 Gewichtsteile, bezogen auf 100 Gewichtsteile Kautschuk in der Mischung, beträgt.

Aus der Gruppe der epoxidierten Polydiene kommen insbesondere epoxidierte Polyisoprene in Frage, wobei sich epoxidierter Naturkautschuk, der zudem in verschiedenen Typen erhältlich ist, als besonders geeignet herausgestellt hat. Der Einsatz eines epoxidierten Naturkautschuks, mit einem Anteil von mindestens 20 % Oxiran (Anteil an Epoxygruppen), insbesondere von mindestens 30 % Oxiran, ist besonders vorteilhaft.

Als Basispolymer bzw. Basispolymer-Verschnitt kommen insbesondere Kautschuke aus der Gruppe der natürlichen und synthetischen Polyisoprene, Styrol-ButadienCopolymere (hergestellt in Emulsion oder in Lösung), Polybutadien, Polyisobutylene, Isobutylen-Isopren-Copolymere, auch deren halogenierte Typen sowie Acrylnitril-Butadien-Copolymere und Polyoctenamere in Frage. Auf das gewünschte Eigenschaftsbild der Kautschukmischung bzw. des daraus hergestellten Laufstreifen wirkt es sich ferner günstig aus, wenn der Anteil an Kieselsäure zwischen 20 und 80 Gewichtsteilen, bezogen auf 100 Gewichtsteile Kautschuk in der Mischung, beträgt.

Durch die verstärkte Wechselwirkung des epoxidierten Polydiens mit Kieselsäure ist es grundsätzlich nicht mehr erforderlich, die Kieselsäure mit einem Silan vorzubehandeln. Ein gewisser Silananteil kann jedoch hilfreich sein. Dabei wird insbesondere eine der marktgängigen, schwefelhältigen Silane verwendet. Der Silananteil wird dabei in einem Bereich zwischen 2 und 12 Gewichtsteilen, bezogen auf 100 Gewichtsteile Kautschuk, gewählt.

Epoxidierte Polydiene besitzen ferner günstigerweise, abhängig vom Epoxidierungsgrad der C-C Doppelbindungen und vom Polymertyp, relativ hohe Glasübergangstemperaturen. So hat beispielsweise ein Naturkautschuk des Typs ENR 25 eine Glasübergangstemperatur von -45°C, ein Naturkautschuk des Typs ENR 50 eine Glasübergangstemperatur von -20°C. Im Rahmen der gegenständlichen Erfindung ist es von Vorteil, wenn epoxidierte Polydiene verwendet werden, deren Glasübergangstemperatur > -50°C, insbesondere > -30°C, ist. Anstelle von Naturkautschuk können in Kautschukmischungen nach der Erfindung auch andere epoxidierte Polydiene, beispielsweise synthetisches Polyisopren, S-SBR, E-SBR und BR, auch im Verschnitt miteinander, verwendet werden. Wie schon oben erwähnt, wird der Epoxidierungsgrad in Abhängigkeit vom Polymertyp gewählt werden.

Die Erfindung wird nun anhand einiger Ausführungsbeispiele näher erläutert. Tabelle 1 enthält Beispiele von Mischungsrezepturen, wobei die Beispiele 1 und 2 Vergleichsbeispiele sind, die kein epoxidiertes Polydien beinhalten, die Beispiele 3 bis 11 wurden in Übereinstimmung mit der vorliegenden Erfindung erstellt. Als epoxidiertes Polydien wurde epoxidierter Naturkautschuk mit 50 % Oxiran verwendet. In sämtlichen Beispielen beziehen sich die angegebenen Teile auf 100 Gewichtsteile Kautschuk in der Kautschukmischung. Erwähnt sei ferner, daß sowohl der S-SBR als auch der E-SBR als ölverstreckte Typen eingesetzt wurden, der Gesamtanteil der Polymere übersteigt daher die Zahl 100. Die nach diesen Rezepturen hergestellten Vulkanisate wurden physikalischen Prüfungen unterworfen, wobei nach folgenden Meßmethoden vorgegangen wurde:
Ermittlung der Härte Shore-A: nach DIN 53505 Messung der Rückprallelastizität: nach DIN 53512
Bestimmung des Abriebes: nach DIN 53516

Die Herstellung der Kautschukmischungen erfolgte in an sich bekannter Weise, indem vorerst in einer ersten Mischstufe die Kautschukkomponenten, ggf. ein Teil des Rußes, das ggf. mit Silan vermengte Kieselsäuregranulat und Verstreckungsöl in einem Mischer geknetet wurden. In der nächsten Mischstufe erfolgte das Einmischen des restlichen Rußanteiles, des Anteiles an Lichtschutzwachs (als Alterungsschutzmittel) und Stearinsäure. In einer weiteren Mischstufe wurden die weiteren Alterungsschutzmittel und Zinkweiß beigegeben, und in einer letzten Mischstufe das Vulkanisationssystem bestehend aus Beschleuniger und Schwefel.

Anhand der für den Abrieb gemessenen Werte zeigt sich, daß jene Mischungen, die nach der Erfindung hergestellt waren, bessere Werte aufwiesen, als die Vergleichsmischungen.

Die Werte für die Rückprallelastizität bei Raumtemperatur, die bekanntermaßen ein Maß für den Naßgriff sind, sind bei den nach der Erfindung erstellten Mischungen sehr gut. Die Rückprallelastizität bei 70°C gilt als Maß für den Rollwiderstand, die ermittelten Meßwerte liegen geringfügig unter jenen Werten, die für die Mischungen nach den beiden Vergleichsbeispielen festgestellt wurden. Es zeigt sich aber, daß die jeweilige Dif-

3

ferenz zwischen den beiden Rückprallelastizitätswerten bei den nach der Erfindung hergestellten Kautschukmischungen größer ist, als bei den beiden Vergleichsbeispielen. Da gleichzeitig die Meßwerte für den Abrieb bei den nach der Erfindung hergestellten Kautschukmischungen niedriger waren als bei den beiden Vergleichsmischungen läßt sich erwarten, daß beim Einsatz erfindungsgemäßer Mischungen in Laufstreifen das Eigenschaftsverhältnis von Rollwiderstand, Naßgriff und Abrieb verbessert sein sollte.

Unter Verwendung der Kautschukmischungen gemäß den Beispielen 7 und 10 wurden PKW-Gürtelreifen der Dimension 175/70 R 13 hergestellt und ihre Eigenschaften getestet. Tabelle 2 zeigt einen Vergleich dieser Reifen zu Reifen der gleichen Dimension, deren Laufstreifenmischungen der in Vergleichsbeispiel 1 und 2 enthaltenen Mischungen entsprach. Naßgriff, Abrieb und Rollwiderstand wurden dabei nach folgenden Testmethoden ermittelt:

Naßgriff:

Mittelwert der Verzögerungen bei Blockierbremsung aus 40, 50, 60, 70, 80 und 90 km/h auf Asphalt.

Rollwiderstand:

Messung des Antriebsmomentes auf einer 2m-Prüftrommel, Durchschnitt der Werte bei 60, 90, 120, 140 und 160 km/h

Abrieb:

Straßenversuch mit Reifen, deren Laufstreifen geteilt durch den Reifenäquator zur Hälfte aus einer der Mischungen nach der Erfindung und zur Hälfte aus einer der Referenzmischungen bestand. Die Auswertung erfolgte nach 15.000 km.

Die ermittelten Reifenmeßdaten bestätigen die Werte der Labormessungen.

Tabelle 1

| | 1 | 2 | 3 | 4 | 5 | 6 | 7 | 8 | 9 | 10 | 11 |
|---|---|---|---|---|---|---|---|---|---|---|---|
| Epoxidierter NR (Epoxyprene ENR 50) | - | - | 40 | 3 | 40 | 10 | 10 | 10 | 10 | 20 | 20 |
| S-SBR (ölverstreckt, Ölanteil 27,3%) | 110 | - | 55 | 105,875 | 55 | 96,25 | 96,25 | 96,25 | 96,25 | - | - |
| E-SBR (Buna EM 1721) | - | 96,25 | - | - | - | - | - | - | - | 68,75 | 68,75 |
| BR (Buna CB 10) | 20 | 30 | 20 | 20 | 20 | 20 | 20 | 20 | 20 | 30 | 30 |
| Ruß (N 121) | 15 | 15 | 15 | 15 | 15 | 15 | 35 | 15 | - | 15 | 10 |
| gefällte Kieselsäure (Ultrasil VN3) | 50 | 50 | 50 | 50 | 50 | 50 | 30 | 50 | 70 | 50 | 50 |
| Mineralöl aromatisch | - | 3,8 | 15 | 2 | 15 | 6,8 | 6,8 | 6,8 | 6,8 | 14,3 | 10,3 |
| Silan X505 | 9,8 | 9,8 | 9,8 | 9,8 | - | 9,8 | 6,7 | 4,9 | 7,5 | 3,3 | 6,6 |
| Alterungsschutzmittel | 3,5 | 3,5 | 3,5 | 3,5 | 3,5 | 3,5 | 3,5 | 3,5 | 3,5 | 3,5 | 3,5 |
| Stearinsäure | 2 | 2 | 2 | 2 | 2 | 2 | 2 | 2 | 2 | 2 | 2 |
| Zinkoxid | 3 | 3 | 3 | 3 | 3 | 3 | 3 | 3 | 3 | 3 | 3 |
| Beschleuniger | 3,5 | 3,5 | 3,5 | 3,5 | 3,5 | 3,5 | 3,5 | 3,5 | 3,5 | 3,5 | 3,5 |
| Schwefel | 1,5 | 1,5 | 1,5 | 1,5 | 1,5 | 1,5 | 1,5 | 1,5 | 1,5 | 1,5 | 1,5 |
| Labortestergebnisse Härte Shore A | 66,7 | 65,4 | 68,8 | 65,5 | 66,2 | 64,2 | 63,0 | 62,6 | 62,0 | 63,8 | 63,7 |
| Rückprallelastizität bei Raumtemperatur % | 32,2 | 31,4 | 18,1 | 30,4 | 17,7 | 25,5 | 27,7 | 25,8 | 25,3 | 20,4 | 22,1 |
| bei 70° C % | 50,5 | 50,7 | 40,6 | 51,2 | 42,4 | 47,0 | 46,3 | 47,1 | 48,0 | 44 | 47,3 |
| DIN-Abrieb mm³ | 123 | 89 | 97 | 120 | 94 | 114 | 117 | 118 | 120 | 78 | 83 |

EP 0 654 364 A1

Tabelle 2

Reifen-Testergebnisse (Kennzahlen)

| Mischung gemäß Beispiel | 1 | 21 | 2 | 24 |
|---|---|---|---|---|
| Naßgriff | 100 | 108 | 100 | 115 |
| Rollwiderstand | 100 | 97 | 100 | 92 |
| Abrieb | 100 | 105 | 100 | 104 |

## Patentansprüche

1. Kautschukmischung für den Laufstreifen eines Reifens, dadurch gekennzeichnet, daß die Laufstreifenmischung auf einer Kautschukkomponente basiert, die aus einem Basispolymer bzw. einem Basispolymer-Verschnitt und epoxidierten Polydien in einem Anteil zwischen 3 und 80 Gewichtsprozent, bezogen auf 100 Gewichtsteile Kautschuk, besteht, wobei die Kautschukmischung als Füllstoff zwischen 3 und 100 Gewichtsteilen Kieselsäure und zwischen 0 und 100 Gewichtsteilen Ruß enthält.

2. Kautschukmischung nach Anspruch 1, dadurch gekennzeichnet, daß der Anteil an epoxidiertem Polydien in der Kautschukmischung zwischen 8 und 45 Gewichtsteilen beträgt.

3. Kautschukmischung nach einem der Ansprüche 1 oder 2, dadurch gekennzeichnet, daß das epoxidierte Polydien ein epoxidiertes Polyisopren ist.

4. Kautschukmischung nach Anspruch 1 bis 3, dadurch gekennzeichnet, daß das epoxidierte Polydien ein epoxidierter Naturkautschuk ist.

5. Kautschukmischung nach Anspruch 4, dadurch gekennzeichnet, daß der epoxidierte Naturkautschuk mindestens 20 % Oxiran, insbesonere mindestens 30 % Oxiran, enthält.

6. Kautschukmischung nach einem der Ansprüche 1 bis 5, dadurch gekennzeichnet, daß das epoxidierte Polydien eine Glasübergangstemperatur > -50°C, insbesondere > -30°C, aufweist.

7. Kautschukmischung nach einem der Ansprüche 1 bis 6, dadurch gekennzeichnet, daß das Basispolymer aus zumindest einem der Kautschuke aus der Gruppe der natürlichen und synthetischen Polyisoprene, Styrol-Butadien-Copolymere (hergestellt in Emulsion oder in Lösung), Polybutadiene, Polyisobutylene, Isobutylen-Isopren-Copolymere, auch deren halogenierte Typen, sowie Acrylnitril-Butadien-Copolymere und Polyoctenamere besteht.

8. Kautschukmischung nach einem der Ansprüche 1 bis 7, dadurch gekennzeichnet, daß der Anteil an Kieselsäure 20 bis 80 Gewichtsteile, bezogen auf 100 Gewichtsteile Kautschuk, beträgt.

9. Kautschukmischung nach einem der Ansprüche 1 bis 8, dadurch gekennzeichnet, daß sie Silan, vorzugsweise schwefelhältiges Silan, in einem Anteil von 2 bis 12 Gewichtsteilen, bezogen auf 100 Gewichtsteile Kautschuk in der Mischung, enthält.

10. Reifen mit einem Laufstreifen, der zumindest zum Teil aus einer Kautschukmischung nach einem der Ansprüche 1 bis 9 hergestellt ist.

EP 0 654 364 A1

Europäisches Patentamt

# EUROPÄISCHER RECHERCHENBERICHT

Nummer der Anmeldung

EP 94 89 0181

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | CHEMICAL ABSTRACTS, vol. 107, no. 10, 7. September 1987, Columbus, Ohio, US; abstract no. 79226, L.C.S.BAKER ET AL. 'Epoxidized natural rubber in passenger car tire treads' * Zusammenfassung * 'Proc. - Int. Rubber Conf. (1986), Meeting Date 1985, Vol 2, 336-352' 1986 , RUBBER RES. INST. MALYSIA , KUALA LUMPUR, MALEYSIA --- | 1-10 | B60C1/00 C08L21/00 C08K5/34 |
| P,X | CHEMICAL ABSTRACTS, vol. 121, no. 4, 25. Juli 1994, Columbus, Ohio, US; abstract no. 37452, T.MURAKI 'Manufacture of rubber compositions for tire treads with improved wet-skid resistance' * sechste IT-Feld * * Zusammenfassung * & JP-A-6 080 786 (YOKOHOMA RUBBER CO LTD) 22. März 1994 --- | 1-10 | |
| A | CHEMICAL PATENTS INDEX, DOCUMENTATION ABSTRACTS JOURNAL Week 9128, 11. September 1991 Derwent Publications Ltd., London, GB; AN 203142 & JP-A-3 126 737 (OHTSU TIRE KK) 29. Mai 1991 * Zusammenfassung * --- | 1 | **RECHERCHIERTE SACHGEBIETE (Int.Cl.6)** B60C C08L |
| A | EP-A-0 456 571 (RHONE-POULENC CHIMIE) * Ansprüche; Beispiele * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 1. März 1995 | Van Humbeeck, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

............................................................................
& : Mitglied der gleichen Patentfamilie, übereinstimmendes Dokument

EPO FORM 1503 03.82 (P04C03)

8